# EUROPÄISCHE PATENTSCHRIFT

(11) **EP 0 388 869 B1**
(45) Veröffentlichungstag und Bekanntmachung des Hinweises auf die Patenterteilung: **06.09.1995**
(21) Anmeldenummer: 90105194.6
(22) Anmeldetag: 20.03.1990
(51) Int. Cl.: C07F 9/09

(54) **Verfahren zur Herstellung von Ascorbinsäure-2-phosphat bzw. dessen Salzen sowie Kaliummagnesium-L-ascorbat-2-phosphat als vorteilhaftes Salz von L-Ascorbinsäure-2-phosphat**
Process for the preparation of ascorbic acid 2-phosphate or its salts as well as potassium magnesium L-ascorbate-2-phosphate as a useful salt of L-ascorbic acid 2-phosphate
Procédé de préparation de l'acide ascorbique-2-phosphorique ou ses sels ainsi que d'ascorbate phosphorique de polassium/magnésium comme sel avantageux de l'acide ascorbique-2-phosphorique

(30) Priorität: 21.03.1989 DE 3909198
(43) Veröffentlichungstag der Anmeldung: 26.09.1990
(73) Patentinhaber: BASF Aktiengesellschaft, 67063 Ludwigshafen (DE)
(72) Erfinder: Dobler, Walter, Dr., D-6900 Heidelberg (DE); Paust, Joachim, Dr., D-6708 Neuhofen (DE); Betz, Roland, Dr., D-6701 Niederkirchen (DE)

(56) Entgegenhaltungen:
- DE-A- 2 719 303
- JP-A- 5 951 293
- JP-A- 6 377 890
- US-A- 4 724 262

## Beschreibung

Die Erfindung betrifft ein Verfahren zur Herstellung von Mono- bzw. Diphosphorsäureestern der Ascorbinsäure, insbesondere der L-Ascorbinsäure, sowie eine besonders vorteilhafte Methode zur Herstellung der dazu benötigten Produktes 5,6-Isopropyliden-ascorbinsäure. Die Erfindung betrifft außerdem Kaliummagnesium-L-ascorbat, über das das L-Ascorbinsäure-2-phosphat besonders vorteilhaft isoliert werden kann.

Die L-Ascorbinsäure (Vitamin C) ist ein lebenswichtiger Teil einer ausgewogenen menschlichen Ernährung und es hat sich eine empfohlene diätetische Verabreichung dieses Vitamins eingebürgert. Jedoch ist das Vitamin C das am wenigsten stabile Vitamin in Nahrungsmitteln, da es äußerst stark mit dem Luftsauerstoff reagiert. So weiß man beispielsweise, daß sich die Ascorbinsäure rasch mit Sauerstoff zur Dehydroascorbinsäure umsetzt, einer Verbindung, welche zwar die volle Vitamin-C-Wirkung beibehält, sich jedoch rasch und irreversibel in Verbindungen ohne Vitamin-C-Wirkung zersetzt. Die Ascorbinsäure wird ebenfalls bei hohen Temperaturen durch Wasserentziehung im sauren Medium zersetzt. So haben sich die Bemühungen, die L-Ascorbinsäure direkt in Teige oder Backwerk, welches anschließend gebacken werden soll, als unwirksam erwiesen, da nur kleine Mengen der Vitamin-C-Wirksamkeit der L-Ascorbinsäure das Kochen und Backen bei hohen Temperaturen übersteht. Auch für die Verwendung von Vitamin C auf dem Futtermittelsektor ist es von großer Bedeutung, das Vitamin in möglichst hitzestabiler Form vorliegen zu haben, damit der Vitaminverlust beim Einarbeiten in das Tierfutter durch Extrudieren und Pelletieren möglichst gering bleibt. Vitamin C spielt neuerdings beim Fisch- und Shrimpfarming eine große Rolle. Es ist bekannt, daß man die Ascorbinsäure gegenüber Sauerstoff und Hitze stabiler machen kann, indem man sie in geeignete Derivate überführt.

Ascorbinsäuremonophosphat hat gegenüber der freien Ascorbinsäure folgende wesentliche Vorteile:
1) relativ hohe Oxidationsstabilität,
2) allgemeine Bioverfügbarkeit, da es durch Phosphatasen in Vivo und in Vitro zu Ascorbinsäure spaltbar ist (Dies wurde nachgewiesen z.B. am Meerschweinchen, an Broilern, an Ferkeln, Rhesusaffen und Fischen),
3) hohe Hitzebeständigkeit, und dadurch die Möglichkeit zum Arbeiten in Extrudern, sowie
4) hohe Hydrolysebeständigkeit.

Die Herstellung von Vitamin-C-Phosphat wurde erstmals von Cutolo und Larizza beschrieben (vgl. Gazz. Chim. Ital. 91 (1961), 964). Die Herstellung geht von Ascorbinsäure bzw. 5,6-Isopropyliden-ascorbinsäure aus, die in Gegenwart von Pyridin und einer starken Base in Wasser mit POCl₃ phosphoryliert wird.

Anschließend wurden in der Literatur einige Modifikationen dieses Verfahrens publiziert, wobei längere Zeit umstritten war, ob es sich bei dem erhaltenen Produkt um den Ascorbinsäure-2- oder -3-phosphorsäureester handelt, bis diese Frage von Jernow (vgl. Tetrahedron, Vol. 35 (1979), Seiten 1483f) eindeutig geklärt wurde. In loc. citatus werden einige dieser Arbeiten zitiert. Das bisher vorteilhafteste Verfahren zur Herstellung von Ascorbinsäure-2-phosphat ist das Verfahren gemäß der DE-OS 27 19 303.

Nachteilig bei allen genannten Verfahren ist, daß sie nur für ein Arbeiten in kleinem Maßstab geeignet sind, da für eine technische Durchführung die beschriebene Aufarbeitung viel zu aufwendig ist. Das Problem ist, daß das Wertprodukt von einem großen überschuß an aus dem Phosphorylierungsverfahren stammenden anorganischen Salzen abgetrennt werden muß. So erhält man beispielsweise gemäß dem Verfahren gemäß DE-OS 27 19 303 bei der Phosphorylierung eine Reaktionslösung, die pro Äquivalent Wertprodukt etwa 4,5 Äquivalente KCl und 1,8 Äquivalente K₃PO₄, d.h. zusammen ca. 6 Äquivalente anorganische Salze enthält.

Diese Lösung wird gemäß DE-OS 27 19 303 zuerst über einen Ionenaustauscher geleitet um die Kaliumionen gegen Wasserstoffionen auszutauschen. Da die Salzkonzentration (KCl, K₃PO₄, Kalium-Isopropyliden-L-ascorbinsäure-2-phosphat) sehr hoch ist, muß in großer Verdünnung gearbeitet werden, damit der Ionenaustausch vollständig stattfindet. Die sich daraus ergebenden großen Volumina verursachen in einem technischen Verfahren hohe Investitionen und enorme Energiekosten für das Eindampfen. Bei der anschließenden Neutralisation mit MgO wird ein großer überschuß an Base benötigt, da neben der Produktsäure auch die gesamte überschüssige HCl und H₃PO₄ neutralisiert werden muß. Darüber hinaus ist die Abtrennung von Mg₃(PO₄)₂ schwierig, da dieses in feinst verteilter Form anfällt und extrem schwierig zu filtrieren ist. Außerdem wird ein Teil des Ascorbinsäurephosphats mit dem fein verteilten Mg₃PO₄ mit ausgefällt und geht dadurch verloren.

Das Wertprodukt wird bei diesem Verfahren als Mg-Salz mit Alkohol ausgefällt, wobei die Bedingungen so gewählt werden müssen, daß die große Menge an MgCl₂, die bei der Neutralisation aus MgO und der HCl entsteht, in Losung bleibt. Nach unseren Untersuchungen war es trotz intensiven Waschens des Produktes mit großen Mengen an wässrigem Ethanol nicht möglich, ein von anorganischen Salzen freies Ascorbinsäurephosphat zu erhalten. Um nach diesem Verfahren ein sauberes Produkt zu erhalten, mußte das Mg-Ascorbinsäurephosphat wieder gelöst, mit einem Ionenaustauscher in die Säureform überführt und mit einer Hilfsbase, wie Cyclohexylamin, in ein umkristallisierbares Salz überführt werden. Das so gereinigte Produkt wurde anschließend wieder umgesalzt.

Ein solches Verfahren ist umständlich, unwirtschaftlich und verlustreich und ist daher für eine industrielle Produktion nicht geeignet.

Weiterhin ist aus JP-A 77890/88 ein Verfahren zur Reinigung von L-Ascorbinsäure-2-phosphat bekannt, bei dem die durch Phosphorlierung von Ascorbinsäure oder deren Derivaten mit einem Phosphorhalogenid erhaltene wäßrige Lösung von L-Ascorbinsäure-2-phosphat durch Elektrodialyse von anorganischen Salzen und niedermolekularen Verunreinigungen befreit wird.

Zur Vorbereitung der Reaktionslösung auf die Elektrodialyse kann diese entweder nach Passieren eines stark sauren Ionenaustauschers oder direkt mit einen Überschuß an Magnesiumchorid versetzt werden, wodurch das in der Lösung enthaltene Phosphat als Magnesiumphosphat ausfällt und eine Isolierung des L-Ascorbinsäure-2-phosphats als Magnesiumsalz ermöglicht wird.

Nachteilig an diesem Verfahren ist, daß die Durchführung einer Elektrodialyse apparativ und energetisch sehr aufwendig ist, daß bei Mitverwendung von MgCl₂ dieses in sehr großem Überschuß eingesetzt wird und daß die Abtrennung von Mg₃(PO₄)₂ sehr schwierig ist, da dieses in feinst verteilter Form anfällt und extrem schwierig zu filtrieren ist. Außerdem wird ein Teil des Ascorbinsäurephosphats mit dem fein verteilten Mg₃(PO₄)₂ mit ausgefällt, was zu Ausbeuteverlusten führt.

Es war daher die Aufgabe der Erfindung, die Aufarbeitung des bei der Phosphorylierung von Ascorbinsäure bzw. Ascorbinsäurederivaten mit POCl₃ in Gegenwart von tertiären Aminen gemäß dem Verfahren der DE-OS 27 19 303 erhaltenen Reaktionsgemisches so vorteilhaft zu gestalten, daß die technische Herstellung von Ascorbinsäurephosphat auf diesem Wege möglich wird.

Es wurde nun überraschenderweise gefunden, daß die in der Reaktionslösung enthaltene freie Phosphorsäure und ein Teil der Kationen der Lösung, die bei dem pH-Wert der Reaktionslösung von 7 und höher, vorzugsweise 11 bis 13, als K₃PO₄ vorliegen, in Gegenwart aller Reaktionsprodukte (Ascorbinsäurederivate, KCl, K₃PO₄) und Hilfsreagentien (tertiäres Amin, wie Pyridin) einfach entfernt werden kann, wenn man der Reaktionslösung eine Magnesiumverbindung, vorzugsweise eine wässrige Lösung einer Mg-Verbindung zusetzt. Die Phosphorsäure verbindet sich trotz der hohen Konzentration an Salzen und Feststoffen zu einem schwerlöslichen Salz der Zusammensetzung KMgPO₄, welches schön ausgebildete Kristalle bildet, die sich leicht aus der Reaktionslösung abfiltrieren lassen, während gleichzeitig der pH-Wert auf 7 bis 11, vorzugsweise 9,0 bis 10,5, sinkt. Diese Umsetzung kann bei 0 bis 50°C, vorzugsweise bei etwa 20°C durchgeführt werden. Das erhaltene KMgPO₄ ist von hoher Reinheit und kann direkt als Düngesalz verwendet werden. Besonders vorteilhaft ist es, wenn man als Magnesiumverbindung Magnesiumchlorid verwendet, da dann das durch das Magnesium verdrängte Kalium als KCl vorliegt, welches im Reaktionsgemisch ohnehin bereits enthalten ist.

Es war sehr überraschend, daß sich aus einer Lösung mit so vielen Komponenten ein schwer lösliches Salz der Zusammensetzung KMgPO₄ bildet, welches in hoher Reinheit anfällt und über Filtration leicht abgetrennt werden kann.

Es ist von entscheidendem Vorteil, daß durch diese Maßnahme ein Teil der Salzfracht des Reaktionsgemisches in Form eines als Düngemittel verwendbaren Salzes abgetrennt werden kann, ohne daß wesentliche Teile des Wertproduktes mitgefällt werden. Dies ermöglicht ein kostengünstiges und umweltverträgliches Verfahren, da auf diese Weise die Salzbelastung der Abwässer stark verringert wird.

Eine Abtrennung des anorganischen Phosphats ist außerdem von großem Vorteil, da dadurch weniger Ionenaustauscherharz zur Abtrennung des Kaliums und anschließend auch weniger Mg-Base zur Neutralisation benötigt wird und bei der Neutralisation kein schlecht filtrierbares Mg₃(PO₄)₂ anfällt.

Gegenstand der Erfindung ist daher ein Verfahren zur Herstellung von Ascorbinsäure-2-phosphat durch Umsetzen von Ascorbinsäure bzw. Ascorbinsäurederivaten, welche eine Gruppierung der Formel I 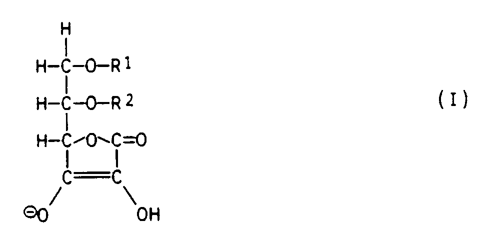
aufweisen, in der R¹ und R² für Wasserstoff stehen oder aber zusammen eine der Gruppen 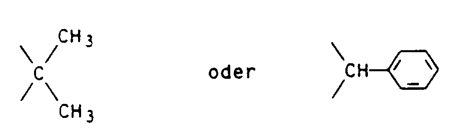
bedeuten,
mit POCl₃ in Gegenwart eines tertiären Amins in einem geeigneten wäßrigen Lösungsmittel bei Temperaturen von -10 bis 25°C, unter Aufrechterhalten eines pH-Wertes von etwa 8 bis 13,5, vorzugsweise 10 bis 13, durch Zugabe von KOH während der gesamten Phosphorylierungsreaktion und anschließende Isolierung des Ascorbinsäure-2-phosphates als solches oder in Form seiner Salze, das dadurch gekennzeichnet ist, daß man das bei der Phosphorylierung anfallende Reaktionsgemisch zur Abtrennung des überschüssigen anorganischen Phosphats direkt und ohne vorherige Ionenaustauscherbehandlung bei einem pH-Wert >7 mit etwa 90 bis 100 mol%, bezogen auf im Reaktionsgemisch vorhandenes anorganisches Phosphat, einer Magnesiumverbindung, vorteilhaft in Form einer wäßrigen Lösung, versetzt, bis die Bildung von kristallinem KMgPO₄ beendet ist, das auskristalisierte KMgPO₄ abtrennt und aus dem Filtrat das Ascorbinsäurephosphat als solches oder in Form seiner Salze in an sich bekannter Weise isoliert.

Die Phosphorylierung erfolgt mit Vorteil gemäß den in der DE-OS 27 19 303 beschriebenen Bedingungen.

Als Ascorbinsäure bzw. Ascorbinsäurederivate, welche eine Gruppierung der Formel I aufweisen 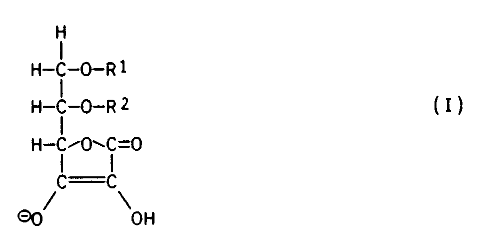
in der R¹ und R² für Wasserstoff stehen oder aber zusammen eine der Gruppen 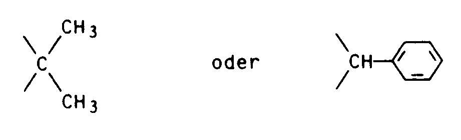
bedeuten,
kommen neben Ascorbinsäure deren Alkalisalze oder Erdalkalisalze sowie deren Salze mit einer basenstabilen Schutzgruppe am C-Atom in 6-Stellung, wie beispielsweise die 5,6-0-Isopropyliden-ascorbinsäure und die 5,6-0-Benzyliden-ascorbinsäure in Betracht. Diese Verbindungen können in den 4 verschiedenen stereoisomeren Formen eingesetzt werden. Besondere Bedeutung hat das Verfahren für die Umsetzung von L-Ascorbinsäure und deren Derivaten.

Als tertiäre Amine sind solche geeignet, die mit dem Reaktionsgemisch mischbar und nicht flüchtig sind und eine Ionisationskonstante von weniger als etwa 10⁷ aufweisen. Genannt seien beispielsweise niedere Trialkylamine, wie Triethylamin, sowie cyclische Amine, wie Pyridin, α-, β- oder γ-Picolin.

Die besten Ausbeuten werden mit Pyridin erhalten. Das Amin verwendet man in etwa der 5-fachen molaren Menge, bezogen auf die Ascorbinsäure.

Besonders vorteilhaft gelingt die Phosphorylierung, wenn die Konzentration des Amins im Reaktionsgemisch etwa 1,5 bis 3 Mol, vorzugsweise 2,2 bis 2,6 Mol und die der Ascorbinsäure etwa 0,3 bis 0,6 Mol, vorzugsweise 0,4 bis 0,5 Mol pro Liter beträgt.

Als Lösungsmittel verwendet man mit Vorteil Wasser.

Im allgemeinen sollte als Reaktionstemperatur die niedrigste Temperatur angewendet werden, bei der das Reaktionsgemisch flüssig bleibt und bei der sich das tertiäre Amin nicht als separate Phase abtrennt. Geeignet sind Temperaturen von -10 bis +10°C.

Als Magnesiumverbindung kommen beispielsweise in Betracht: MgBr₂ und MgSO₄, insbesondere Magnesiumchlorid. Es ist von Vorteil das Magnesiumsalz in Form einer wäßrigen Lösung zuzufügen.

Die Menge an Magnesiumsalz beträgt im allgemeinen etwa 90 bis 110 Mol%, bezogen auf im Reaktionsgemisch vorhandenes anorganisches Phosphat.

Recht vorteilhaft gestaltet sich das erfindungsgemäße Verfahren, wenn man
A) von einem Ascorbinsäurederivat ausgeht, das eine Gruppierung der Formel I aufweist, in der R¹ und R² für Wasserstoff stehen oder aber zusammen eine der Gruppen 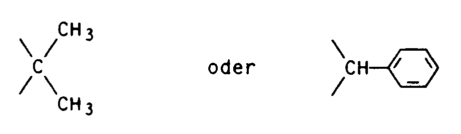 bedeuten,
B) das bei der Phosphorylierung anfallende Reaktionsgemisch ohne vorherige Ionenaustauscherbehandlung mit der wäßrigen Lösung einer Magnesiumverbindung, vorzugsweise Magnesiumchlorid, versetzt bis die Bildung von kristallinem KMgPO₄ beendet ist,
C) das auskristallisierte KMgPO₄ abtrennt,
D) das dabei erhaltene Filtrat zur Abtrennung der anorganischen Kaliumsalze bei einem pH-Wert von 6 bis 11, vorzugsweise 7,5 bs 8, bis zu einem Gehalt von 20 bis 90 Gew.-%, vorzugsweise 40 bis 50 Gew.-% an Trockenmasse einengt und auf Temperaturen von -10 bis +20°C abkühlt bis das Auskristallisieren der Kaliumsalze, bzw. Kaliumchlorid beendet ist
   oder aber das nach dem Auskristallisieren und Abtrennen von KMgPO₄ erhaltene Filtrat bei einem pH-Wert von 6 bis 11, vorzugsweise 7,5 bis 8, einengt und anschließend bei Temperaturen von 0 bis 60°C, vorzugsweise 20 bis 30°C mit der 0,1 bis 5-fachen Menge, vorzugsweise der 0,8- bis 1,2-fachen Menge, bezogen auf das eingesetzte Filtrat, an einem primären niederen Alkanol oder Aceton versetzt und unter Rühren auf Temperaturen von -20 bis 20°C, vorzugsweise 0 bis 10°C abkühlt, bis das Auskristallisieren der Kaliumsalze, bzw. von KCl beendet ist, und
E) aus der durch Abtrennen der Kaliumsalze bzw. von KCl erhaltenen, weitgehend von anorganischen Salzen befreiten Reaktionslösung das Ascorbinsäurephosphat als solches oder in Form seiner Salze in an sich bekannter Weise isoliert.

Bezüglich näherer Einzelheiten über diese Isolierung verweisen wir beispielsweise auf die DE-OS 27 19 303.

Das Einstellen der geeigneten pH-Werte des Reaktionsgemisches erfolgt mit Vorteil durch Zugabe von KOH- bzw. HCl-Lösungen.

Aus dem beim Einengen gemäß Schritt E erhaltenen Kondensat kann das tertiäre Amin, insbesondere Pyridin, leicht abgetrennt undzurückgewonnen und wieder für die Phosphorylierung verwendet werden.

Als primäre niedere Alkanole seien die wasserlöslichen Alkanole mit 1 bis 4 C-Atomen, insbesondere Methanol genannt.

Die Zugabe des Alkanols findet im allgemeinen bei 0 bis 60°C, vorzugsweise bei 20 bis 30°C, das Ausrühren und die Abtrennung des KCl bei -20 bis 50°C, vorzugsweise bei 0 bis 10°C statt. Das Kristallisat wird mit Alkohol bzw. Alkohol/Wassergemischen gewaschen. Das Kristallisat ist danach sehr rein und kann für andere Zwecke verwendet werden.

Es ist überraschend, daß das Isopropylidenascorbinsäurephosphat, welches als Kalium, Dikalium bzw. Trikaliumsalz vorliegt, vollständig in Lösung bleibt, vor allem, wenn man berücksichtigt, daß die basischen Alkali- und Erdalkalisalze des Ascorbinsäure-2-phosphats durch den Zusatz von Alkoholen ausgefällt werden.

Es ist von entscheidendem Vorteil, daß ein weiterer Teil der Salzfracht in Form eines verwertbaren Salzes abgetrennt werden kann. Dies ist kostengünstig und umweltverträglich, da dadurch die Salzbelastung der Abwässer verringert wird. Soll das ausgefällte Kaliumsalz weiterverwendet werden und ist es dafür erforderlich, daß es sich um ein einheitliches Salz handelt, muß als Magnesiumverbindung Magnesiumchlorid verwendet werden.

Es ist weiterhin von großem Vorteil, daß zur Überführung des Kalium-Isopropylidenascorbinsäure-2-phosphats in die Säureform weniger Ionenaustauscherharz benötigt wird und bei dem Ionenaustauschprozeß keine überschüssige Mineralsäure freigesetzt wird:
Dadurch wird auch zur Neutralisation weniger Mg-Base benötigt. Es ist ein weiterer Vorteil, daß bei dieser Verfahrensführung zur Neutralisation des mineralsäurefreien Ionenaustauschereluats jede beliebige Base verwendet werden kann, da bei der anschließenden Kristallisation nicht mehr die Gefahr besteht, daß zusammen mit dem Wertprodukt anorganische Salze ausfallen. Besonders vorteilhaft ist dies, wenn für eine spätere Hochreinigung das Cyclohexylammoniumsalz hergestellt werden soll, da dieses nun direkt aus dem Ionenaustauschereluat hergestellt werden kann, wodurch die Kristallisation über das Magnesiumsalz überflüssig wird.

Besonders vorteilhaft gestaltet sich das erfindungsgemäße Verfahren, wenn man von einem Ascorbinsäurederivat ausgeht, das eine Gruppierung der Formel I aufweist, in der R¹ und R² zusammen die Gruppe 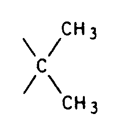
bedeuten
und welches hergestellt wurde durch 1- bis 8-stündiges, vorzugsweise 5-bis 6-stündiges, Behandeln bei Temperaturen von -20 bis +40°C, vorzugsweise -10 bis +10°C mit einem Gemisch, welches durch Zufügen von 0 bis 65 gew.%igem, vorzugsweise etwa 20 bis 30 gew.-%igem Oleum zu einem 0 bis 5 Gew.-%, vorzugsweise 0,6 bis 1,5 Gew.-% Wasser enthaltenden Aceton bei Temperaturen von -30 bis +40°C, vorzugsweise -10 bis 0°C unter Rühren erhalten worden ist, Abtrennen der auskristallisierenden 5,6-Isopropyliden-ascorbinsäure bei Temperaturen von etwa -15°C und Trockenpressen der Kristalle.

Wird die Phosphorylierung gleich anschließend vorgenommen, kann das auskristallisierte Produkt ohne jede Waschung trockengepreßt und gleich mit der enthaltenen Restfeuchte in die wäßrige KOH-Lösung eingetragen werden.

Während des Lösungsprozesses soll dabei auf Sauerstoffausschluß geachtet werden.

Die Menge an Oleum ist so zu wählen, daß Schwefelsäure im Reaktionsgemisch nach der Reaktion bezogen auf den Wassergehalt etwa 100 bis 60 %ig, vorzugsweise etwa 80 %ig ist, wobei die zu bindende Wassermenge über den Wassergehalt des Lösungsmittels und über das bei der Reaktion entstehende Wasser berechnet wird.

Die Mutterlauge des Kristallisats, welche nunmehr Aceton, Schwefelsäure und Spuren von Ascorbinsäurederivaten enthält, wird bei -20 bis +40°C, vorzugsweise -10 bis +10°C, mit einer der Säuremenge entsprechenden stöchiometrischen Menge Natronlauge (vorzugsweise 40 bis 50 %ig) versetzt, wobei Na₂SO₄ x nH₂O (n = 3 bis 5) als kristalline Verbindung ausfällt, die über Filtration abgetrennt werden kann. Das vom Kristallisat befreite Aceton kann in guter Ausbeute destilliert werden, wobei Aceton mit einem Wassergehalt von ca. 1,4 % anfällt, welches wieder für die oben beschriebene Umsetzung eingesetzt werden kann. Es ist von großem Vorteil, daß mit Oleum als Katalysator Aceton mit einem Wassergehalt von bis zu 5 % eingesetzt werden kann und dennoch eine Umsetzung von >99 % erzielt wird. Oleum ist sehr billig.

Es ist von großem Vorteil, daß die Katalysatorsäure nach der Reaktion Vollständig in fester Form als Na₂SO₄ abgetrennt werden kann und dadurch Aceton aus der Mutterlauge in hoher Ausbeute durch Filtration und einfache Destillation in hoher Reinheit zurückgewonnen werden kann.

Dadurch, daß die 5,6-Isopropyliden-ascorbinsäure ohne Waschung direkt in die Phosphorylierung eingesetzt werden kann, werden maximale Ausbeuten erzielt.

Es war sehr überraschend, daß die Umsetzung zu Isopropylidenascorbinsäure auf die angegebene Weise ohne nachweisbare Nebenproduktbildung stattfindet, obwohl eine große Menge an Schwefelsäure im Reaktionsgemisch anwesend ist.

Somit ergibt sich ein besonders vorteilhaftes Gesamtverfahren zur Herstellung von Ascorbinsäure-2-phosphat, insbesondere von L-Ascorbinsäure-2-phosphat bzw. deren Salzen, das dadurch gekennzeichnet ist, daß man
A) Ascorbinsäure, insbesondere L-Ascorbinsäure, bei Temperaturen von -10 bis +10°C 5 bis 6 Stunden mit einem durch Zufügen von 0 bis 65 gew.%igem Oleum zu einem 0 bis 5 Gew.-% Wasser enthaltenden Aceton bei -30 bis +40°C unter Rühren erhaltenen Gemisch behandelt, die dabei auskristallisierende 5,6-Isopropyliden-L-ascorbinsäure bei etwa -15°C abtrennt, trockenpreßt, und dann unter Aufrechterhalten eines pH-Wertes von 8 bis 13,5 mittels KOH und in Gegenwart von einem tertiären Amin bei Temperaturen von -10 bis +25°C in einem geeigneten wäßrigen Lösungsmittel mit POCl₃ umsetzt,
B) das bei der Phosphorylierung anfallende Reaktionsgemisch ohne vorherige Ionenaustauscherbehandlung mit der wäßrigen Lösung von Magnesiumchlorid versetzt bis die Bildung von kristallinem KMgPO₄ beendet ist,
C) das auskristallisierte KMgPO₄ abtrennt,
D) das dabei erhaltene Filtrat zur Abtrennung von Kaliumchlorid bei einem pH-Wert von 6 bis 11, vorzugsweise 7,5 bis 8 einengt und/oder mit der 0,1 bis 5-fachen Menge, vorzugsweise der 0,8 bis 1,2-fachen Menge, bezogen auf das eingeengte Filtrat, an einem niederen Alkanol oder Aceton versetzt und auf Temperaturen von 0 bis 10°C abkühlt, bis das Auskristallisieren von KCl beendet ist und
E) aus der so erhaltenen, weitgehend von anorganischen Salzen befreiten Reaktionslösung das Ascorbinsäurephosphat bzw. L-Ascorbinsäurephosphat als solches oder in Form seiner Salze in an sich bekannter Weise isoliert.

Soll die durch Umsetzen von Ascorbinsäure(derivaten) und Aceton in Gegenwart von Oleum hergestellte 5,6-Isopropyliden-ascorbinsäure nicht gleich weiterverarbeitet, sondern getrocknet und gelagert werden, muß das Kristallisat mehrfach mit eiskaltem Aceton gewaschen werden.

Ganz besonders vorteilhaft gestaltet sich das erfindungsgemäße Verfahren, wenn man das erhaltene Ascorbinsäure-2-phosphat über ein noch nicht beschriebenes Kaliummagnesiumsalz isoliert. Kaliummagnesiumascorbinsäure-2-phosphat zeichnet sich durch sehr vorteilhafte Produkteigenschaften aus. Es fällt aus Lösungen in gut kristalliner Form aus und besitzt dadurch extrem gute Filtrationseigenschaften und neigt nicht zu Verklumpung beim Trocknen. Es besitzt einen definierten Kristallwassergehalt und ist nicht hygroskopisch. Da es im Gegensatz zum reinen Magnesiumsalz nur 3 statt 5 Mol Kristallwasser pro Mol Ascorbat enthält, ist der vitamin-C-Gehalt eines solchen Trockenpulvers höher. Reineres, d.h. von Bis-(2,2'-ascorbat)-phosphat freies Produkt erhält man zwar beim Ausfällen des Ascorbinsäure-2-phosphats als Calciumsalz. Jedoch sind hierbei die durch Kristallisation erzielbaren Ausbeuten um etwa 20 % geringer.

Gegenstand der Erfindung ist daher auch das neue vorteilhafte Kaliummagnesiumascorbat-2-phosphat. Kalium und Magnesium müssen in diesem Mischsalz nicht genau in stöchiometrischen Verhältnissen vorliegen. Das Kalium/ Magnesiumverhältnis in der Lösung, aus der das Mischsalz ausgefällt wird, ist mit dem des daraus erhaltenen kristallinen Produktes identisch. Optimale Ergebnisse bei der Isolierung von Ascorbinsäure-2-phosphat in Form eines Kaliummagnesiummischsalzes werden erzielt, wenn das Salz eine Zusammensetzung von etwa K_{1±0,3}Mg_{1±0,15} Ascorbat-2-phosphat aufweist. Das Nebenprodukt Bis-(2,2'-ascorbat)phoshat kristallisiert in dem KMg-Mischsalz im gleichen Verhältnis aus, wie im reinen Magnesiummsalz.

Zur Isolierung des Ascorbinsäure-2-phosphats in Form des KMg-Mischsalzes geht man im allgemeinen so vor, daß man die nach Abtrennen der anorganischen Kaliumsalze erhaltene, weitgehend von anorganischen Salzen befreite wäßrige Reaktionslösung, ggf. nach Entfernen des zur Fällung von KCl verwendeten niederen Alkanols bzw. Acetons, und Verdünnen mit Wasser über einen mittelaciden Kationenaustauscher leitet und in das erhaltene saure Eluat unter Kühlung MgO, Mg(OH)₂ oder MgCO₃ einträgt bis der pH-Wert auf 7 angestiegen ist. Anschließend wird die erhaltene Reaktionslösung etwa 4 bis 10 Stunden, vorzugsweise 5 bis 7 Stunden gerührt, zur Entfernung einer Trübung filtriert, im Rotationsverdampfer eingeengt und schließlich in überschüssiges niederes Alkanol, vorzugsweise Methanol, oder Aceton, eingerührt. Es werden hierbei gut filtrierbare körnige Kristalle erhalten. Diese Kristalle können im Trockenschrank unter Stickstoff gut getrocknet werden.

Gegenstand der Erfindung ist dementsprechend auch das oben beschriebene Verfahren zur Herstellung von L-Ascorbinsäure-2-phosphat in Form von Kaliummagnesium-L-ascorbat-2-phosphat, das dadurch gekennzeichnet ist, daß man
A) L-Ascorbinsäure bei Temperaturen von -10 bis +10°C 5 bis 6 Stunden mit einem durch Zufügen von 0 bis 65 gew.-%igem Oleum zu einem 0 bis 5 Gew.-% Wasser enthaltenden Aceton bei -30 bis +40°C unter Rühren erhaltenen Gemisch behandelt, die dabei auskristallisierende 5,6-Isopropyliden-L-ascorbinsäure bei etwa -15°C abtrennt, trockenpreßt, und dann unter Aufrechterhalten eines pH-Wertes von 8 bis 13,5 mittels KOH und in Gegenwart von einem tertiären Amin bei Temperaturen von -10 bis +25°C in einem geeigneten wäßrigen Lösungsmittel mit POCl₃ umsetzt,
B) das bei der Phosphorylierung anfallende Reaktionsgemisch ohne vorherige Ionenaustauscherbehandlung mit der wäßrigen Lösung von Magnesiumchlorid versetzt bis die Bildung von kristallinem KMgPO₄ beendet ist,
C) das auskristallisierte KMgPO₄ abtrennt,
D) das dabei erhaltene Filtrat zur Abtrennung von Kaliumchlorid bei einem pH-Wert von 6 bis 11 einengt und/oder mit der 0,1 bis 5fachen Menge, vorzugsweise der 0,8 bis 1,2-fachen Menge, bezogen auf das ggf. eingeengte Filtrat, an einem niederen Alkanol oder Aceton versetzt und auf Temperaturen von 0 bis 10°C abkühlt, bis das Auskristallisieren von KCl beendet ist und
E) die so erhaltene, weitgehend von anorganischen Salzen befreite Reaktionslösung mit einem mittelaciden Kationenaustauscher, der seine Austauschkapazität in dem pH-Bereich von etwa 2,0 bis 0,5, vorzugsweise 1,2 bis 0,8 verliert, behandelt, und
F) aus dem erhaltenen, im wesentlichen das Monokaliumsalz von L-Ascorbinsäure-2-phosphat enthaltenden Reaktionsgemisch durch Zugabe von MgO, Mg(OH)₂ oder MgCO₃ bis zu einem pH-Wert der Lösung von etwa 7 und ggf. Behandeln mit Methanol oder Aceton, das L-Ascorbinsäure-2-phosphat in Form des neuen Kaliummagnesiumascorbat-2-phosphats ausfällt.

Als mittelacide Kationenaustauscher, die ihre Austauschkapazität in dem pH-Bereich von etwa 2,0 bis 0,5, verlieren, verstehen wir im wesentlichen gelförmige oder makroporöse Austauscherharze, die aus einem Copolymeren aus Styrol und Divinylbenzol aufgebaut sind und geeignete kovalente gebundene funktionelle Gruppen tragen.

Als geeignete funktionelle Gruppen sind insbesondere die im folgenden darstellten Gruppen zu nennen: 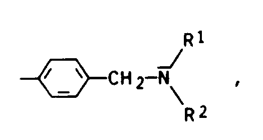
in denen
a) R¹ = H und R² = 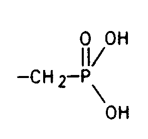
b) R¹ = R² = 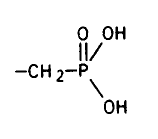
c) R¹ = R² = -CH₂-COOH
   oder
d) R¹ = H; R² = -CH₂-COOH

Es können außer den speziellen Harzen auch andere verwendet werden, wenn sie einen vergleichbaren Aufbau haben, d.h. wenn sie die genannten oder wirkungsgleiche funktionelle Gruppen tragen. Demgegenüber sind Austauscherharze, die nur -COOH-Gruppen tragen, nicht sauer genug und solche, die -SO₃H-Gruppen tagen, zu sauer.

Genannt seien beispielsweise Lewatit OC1060 sowie Lewatit TP 207 und TP 208.

Besonders geeignet ist Lewatit OC 1060, der bei pH = etwa 0,5 keine meßbare Austauschkapazität mehr besitzt. Dadurch ist sichergestellt, daß nur 2 der 3 K⁺-Ionen im Kaliumsalz des Ascorbinsäure-2-phosphats ausgetauscht werden. Dies ist ein besonderer Vorteil, wenn man Gas Kaliummangesium-L-ascorbat-2-phosphat herstellen will, da so nur die Menge an K⁺ entfernt wird, die anschließend durch Mg²⁺ ersetzt werden soll.

Die Reaktionsdauer zur Abspaltung der Isopropylidenschutzgruppe beträgt bei dieser Reaktionsführung bei 30°C ca. 2 Stunden.

Ein enormer Vorteil der Verwendung mittelacider Ionenaustauscher gegenüber der von stark sauren Ionenaustauschern bei bekannten Verfahren liegt darin, daß das sich bildende Eluat weniger sauer ist und dadurch keine Rückspaltung des Ascorbinsäure-2-phosphats zu Ascorbinsäure auftritt, was sich sehr vorteilhaft auf die Produktqualität, insbesondere die Farbe des Produktes auswirkt. Als weitere Vorteile, die sich durch Verfahrensführung über das neue Kaliummagnesium-L-ascorbat-2-phosphat ergeben, sind zu nennen:
a) geringerer Verbrauch von MgO
b) geringere Salzemission
c) bessere Raum-Zeit-Ausbeute durch um 1/3 geringere Regenerierungszeiten des Ionenaustauschers.

Die Neutralisation des erhaltenen Eluats mit MgO, Mg(OH)₂ oder MgCO₃ erfolgt im allgemeinen bei Temperaturen von 20 bis 25°C. Zum Ausfällen des Kaliummagnesiumascorbat-2-phosphats wird die Reaktionslösung im allgemeinen eingeengt und danach mit Vorteil in ein niederes Alkanol oder Aceton, vorzugsweise in Methanol, eingegossen.

Mit Hilfe des erfindungsgemäßen Verfahrens ist es möglich, die begehrten Ascorbinsäure-2-phosphate, insbesondere L-Ascorbinsäure-2-phosphat, als solches oder in Form von seinen Salzen, insbesondere dem neuen Kaliummagnesiumascorbat-2-phosphat, auf sehr vorteilhafte Weise technisch herzustellen.

### Beispiel 1

A. Herstellung von 5,6-Isopropyliden-L-ascorbinsäure
   Zu 480 ml Aceton (Wassergehalt ca. 0,4 %) wurden bei -10°C 43 g eines 24 %igen Oleum zugetropft. In die erhaltene Mischung wurden bei Temperaturen von 0°C 120 g L-Ascorbinsäure eingetragen und das Reaktionsgemisch 6 Stunden (h) bei 0°C gerührt. Anschließend kühlte man auf -15°C ab und saugte die Kristalle ab. Der erhaltene Filterkuchen wurde trockengepreßt und dann gemäß B weiterverarbeitet.
   Die Ausbeute betrug 97 bis 98 % der Theorie, der Gehalt an unumgesetzter L-Ascorbinsäure war <0,5 %.
B. Phosphorylierung von 5,6-Isopropyliden-L-ascorbinsäure
   Der gemäß A erhaltene trockengepreßte Filterkuchen wurde langsam in ein Gemisch von 1200 ml Wasser und 300 ml Pyridin eingetragen, wobei durch laufende Zugabe von KOH-Lösung der pH-Wert auf 12 bis 13 gehalten wurde.
   Anschließend wurden zu der Mischung bei 0°C langsam 146 g POCl₃ zugegeben, wobei der pH-Wert durch Zugabe von KOH auf 13 gehalten wurde. Dann rührte man noch 30 Minuten (min) nach und prüfte das Reaktionsgemisch auf Ausgangsmaterial.
C. Ausfällung von KMgPO₄·6H₂O
   Das gemäß B erhaltene Reaktionsgemisch wurde mit 70 g MgCl₂·6 H₂O in Form einer ca. 30 gew.%igen wäßrigen Lösung versetzt und anschließend noch 1 Stunde (h) gerührt. Dann wurde von gebildetem kristallinem Niederschlag abgesaugt und der Niederschlag 2 x mit 100 ml Wasser gewaschen und getrocknet. Es wurden so ca. 90 g KMg PO₄·6 H₂O erhalten.
D. Ausfällung von KCl
   Das gemäß C erhaltene Filtrat wurde auf 1000 ml eingedampft und anschließend mit 1 L Methanol versetzt. Dann wurde noch 1 h gerührt und anschließend vom gebildeten Niederschlag abgesaugt, der Niederschlag 2 x mit 200 ml Methanol/Wasser (60/40) gewaschen und getrocknet. Man erhielt ca. 235 g KCl.
E. Isolierung von L-Ascorbinsäurephosphat als Magnesiumsalz
   Die vereinigten Filtrate aus D wurden bei vermindertem Druck auf ca. 800 g eingedampft und dann über eine mit einem stark sauren Ionenaustauscher (Lewatit S-100 in H⁺-Form) gefüllte Säule geleitet. Anschließend spülte man mit ca. 1 l Wasser nach und sammelte ca. 2200 ml des sauren Eluats. Das saure Eluat wurde mit ca. 39 g MgO versetzt und gerührt bis sich nahezu alles gelöst hatte. Der pH-Wert der Lösung betrug dabei ca. 8,5 bis 9. Anschließend filtrierte man so einen kleinen Teil an Ungelöstem ab und dampfte auf ca. 500 g ein. Die so erhaltene Lösung wurde unter Rühren in ca. 1200 g Methanol getropft. Die dabei gebildeten Kristalle wurden abgesaugt, mit 300 ml Methanol gewaschen, trockengepreßt und getrocknet. So wurden 210 g Magnesium-L-ascorbat-2-phosphat·5 H₂O erhalten. Das Produkt enthielt ca. 7 % 2,2'-Bisascorbinsäuremonophosphat und hatte einen Vitamin-C-Gehalt von ca. 46 %.
   Die Ausbeute betrug 80 % der Theorie, bezogen auf eingesetztes vitamin C.

### Beispiel 2

Man arbeitete wie in Beispiel 1A, B und C beschrieben. Zur Ausfällung von KCl wurde das gemäß 1C erhaltene Filtrat auf ca. 600 ml eingedampft und anschließend 1 h bei 0°C gerührt. Dann wurde vom gebildeten Niederschlag abgesaugt, der Niederschlag 2 x mit 200 ml Eiswasser gewaschen und getrocknet. Man erhielt ca. 185 g KCl.

Zur Isolierung des L-Ascorbinsäure-2-phosphats als Magnesiumsalz wurden die vereinigten Filtrate über einen stark sauren Ionenaustauscher (Lewatit S-100 in H⁺-Form) geleitet. Anschließend wurde mit 1,5 Liter Wasser gespült und ca. 2700 ml des sauren Eluats gesammelt. Das Eluat wurde mit MgO auf einen pH-Wert von 9 gebracht. Dann filtrierte man von den geringen Mengen an Ungelöstem ab und engte die Lösung auf ca. 600 ml ein.

Anschließend wurde diese Lösung in 1200 ml Methanol eingetropft. Die dabei gebildeten Kristalle wurden abgesaugt und 5 x mit 500 ml eines Gemisches aus Methanol/Wasser (1/1) und 1 x mit 300 ml Methanol gewaschen.

Es wurden so 190 g Magnesium-L-Ascorbat-2-phosphat erhalten. Das erhaltene Produkt enthält ca. 3 % 2,2' -Bis-L-ascorbinsäuremonophosphat und hat einen vitamin-C-Gehalt von ca. 42 %.

### Beispiel 3

Man arbeitet wie in Beispiel 1A, 1B, 1C und 1D beschrieben.

Zur Isolierung von Ascorbinsäure-2-phosphat in Form des neuen Kaliummagnesiumascorbat-2-phosphats wurden die vereinigten Filtrate aus 1D bei vermindertem Druck auf ca. 800 g eingedampft, mit 200 ml Wasser verdünnt und dann über eine mit dem mittelaciden Ionenaustauscher Lewatit OC-1060 (polymer gebundene Amidophosphonsäure, H⁺-Form) gefüllte Säule geleitet.

Das erhaltene Eluat wies einen pH-Wert von etwa 1,2 auf. Zur Abspaltung der Isopropylidenschutzgruppe wurde das Eluat 2 h bei 30°C gehalten. Anschließend wurde das Eluat bei einer Temperatur von 20 bis 25°C mit MgO neutralisiert, 6 h nachgerührt, filtriert und dann am Rotationsverdampfer bei 80°C auf etwa 450 g eingedampft und anschließend sofort in 1100 ml Methanol eingegossen. Das auskristallisierte Salz wurde abfiltriert, mit Methanol gewaschen und getrocknet.

Man erhielt 220 g körnige maisgelbe Kristalle, entsprechend einer Ausbeute von 87,7 % d.Theorie, bezogen auf Ascorbinsäure.

Die Analyse ergab für das Salz ein Atomverhältnis von K_{0,8}Mg_{1,06}C_{5,6}H_{12,8}P₁ entsprechend der Verbindung KMgC₆H₆PO₉x3H₂O.

Laut HPLC-Analyse enthielt das Produkt 89,0 % Ascorbat-2-phosphat und 9,9 % Bis-(2,2'-ascorbat)phosphat.

### Beispiel 4

Zum Nachweis der vorteilhaften Eigenschaften des neuen Kaliummagnesium-L-ascorbat-2-phosphats gegenüber Kalium-L-ascorbat-2-phosphat und Magnesium-L-ascorbat-2-phosphat wurde der Filtrationswiderstand, die Verklumpung beim Trocknen und die Staubbildung von Kaliummagnesium-L-ascorbat-2-phosphaten der Formel KₓMg_{y}C₆H₆PO₉ x 3 H₂O, d.h. also von Kaliummagnesium-L-ascorbat-2-phosphaten mit unterschiedlichem K/Mg-Verhältnis mit den entsprechenden Eigenschaften der Kaliumsalze (x = 3, y = 0) bzw. Magnesiumsalze (x = 0; y = 1,5) verglichen.

| Versuch | X | Y | Filtrationswiderstand | Verklumpen beim Trocknen | Staubbildung |
|---|---|---|---|---|---|
| a) | 0,00 | 1,50 | +++ | ++- | +++ |
| b) | 0,08 | 1,46 | +++ | ++- | +++ |
| c) | 0,17 | 1,42 | +++ | ++ | ++ |
| d) | 0,27 | 1,37 | ++ | ++ | ++ |
| e) | 0,36 | 1,32 | ++ | + | ++ |
| f) | 0,48 | 1,26 | + | + | + |
| g) | 0,61 | 1,20 | - | - | + |
| h) | 0,75 | 1,12 | - | - | + |
| i) | 0,83 | 1,09 | - | - | + |
| j) | 1,08 | 0,96 | - | - | + |
| k) | 1,20 | 0,86 | - | - | + |
| l) | 1,54 | 0,73 | + | + | - |
| m) | 1,86 | 0,57 | + | + | - |
| n) | 2,15 | 0,43 | + | ++ | - |
| o) | 3,00 | 0,00 | Produkt fällt als Öl an | | |
| Die Versuche ergaben, daß Salze mit der Zusammensetzung K_{1±0,3}Mg_{1±0,15}-Ascorbat-2-phosphat die besten Produkteigenschaften aufweisen. Bewertungsskala: +++ sehr groß ++ groß + durchschnittlich - gering | | | | | |

## Patentansprüche

1. Verfahren zur Herstellung von Ascorbinsäure-2-phosphat durch Umsetzen von Ascorbinsäure bzw. Ascorbinsäurederivaten, welche eine Gruppierung der Formel I 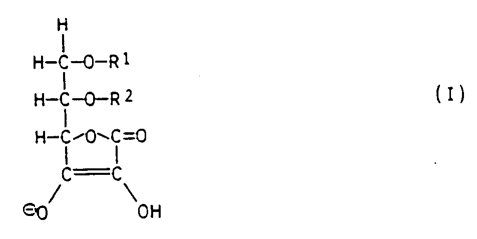 aufweisen, in der R¹ und R² für Wasserstoff stehen oder aber zusammen eine der Gruppen 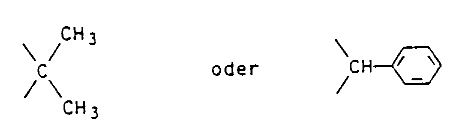 bedeuten,
mit POCl₃ in Gegenwart eines tertiären Amins in einem geeigneten wäßrigen Lösungsmittel bei Temperaturen von -10 bis 25°C, unter Aufrechterhalten eines pH-Wertes von etwa 8 bis 13,5 durch Zugabe von KOH während der gesamten Phosphorylierungsreaktion und anschließende Isolierung des Ascorbinsäure-2-phosphates als solches oder in Form seiner Salze, dadurch gekennzeichnet, daß man das bei der Phosphorylierung anfallende Reaktionsgemisch zur Abtrennung des überschüssigen anorganischen Phosphats direkt und ohne vorherige Ionenaustauscherbehandlung bei einem pH-Wert > 7 mit etwa 90 bis 110 mol-%, bezogen auf im Reaktionsgemisch vorhandenes anorganisches Phosphat, einer Magnesiumverbindung, vorteilhaft in Form einer wäßrigen Lösung, versetzt bis die Bildung von kristallinem KMgPO₄ beendet ist, das auskristallisierte KMgPO₄ abtrennt und aus dem Filtrat das Ascorbinsäurephosphat als solches oder in Form seiner Salze isoliert.

2. Verfahren gemäß Anspruch 1, dadurch gekennzeichnet, daß man das durch Abtrennen von auskristallisiertem KMgPO₄ erhaltene Filtrat zur Abtrennung der anorganischen Kaliumsalze bei einem pH-wert von 6 bis 11 bis zu einem Gehalt von 20 bis 90 Gew.-% an Trockenmasse einengt und auf Temperaturen von -10 bis +20°C abkühlt bis das Auskristallisieren der Kaliumsalze beendet ist und
aus der durch Abtrennen der anorganischen Kaliumsalze erhaltenen, weitgehend von anorganischen Salzen befreiten Reaktionslösung das Ascorbinsäurephosphat als solches oder in Form seiner Salze in an sich bekannter Weise isoliert.

3. Verfahren gemäß Anspruch 1, dadurch gekennzeichnet, daß man das durch Abtrennen von auskristallisiertem KMgPO₄ erhaltene Filtrat zur Abtrennung der anorganischen Kaliumsalze bei Temperaturen von 0 bis 60°C und einem pH-Wert von 6 bis 11 einengt und mit der 0,1 bis 5-fachen Menge, bezogen auf das eingeengte Filtrat, an einem primären niederen Alkanol oder Aceton versetzt und unter Rühren auf Temperaturen von -20 bis +50°C abkühlt, bis das Auskristallisieren der Kaliumsalze beendet ist und
aus der nach Abtrennen der anorganischen Kaliumsalze erhaltenen, weitgehend von anorganischen Salzen befreiten Reaktionslösung das Ascorbinsäurephosphat als solches oder in Form seiner Salze in an sich bekannter Weise isoliert.

4. Verfahren gemäß Anspruch 1, dadurch gekennzeichnet, daß man von einem Ascorbinsäurederivat ausgeht, das eine Gruppierung der Formel 1 aufweist, in der R¹ und R² zusammen die Gruppe 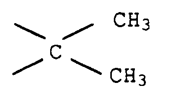 bedeuten und welches hergestellt wurde durch 1- bis 8-stündiges Behandeln bei Temperaturen von -20 bis +40°C mit einem Gemisch, welches durch Zufügen von 0 bis 65 gew.-%igem Oleum zu einem 0 bis 5 Gew.-% Wasser enthaltenden Aceton bei Temperaturen von -30 bis +40°C unter Rühren erhalten worden ist, Abtrennen der auskristallisierenden 5,6-Isopropyliden-ascorbinsäure bei Temperaturen von etwa -15°C und Trockenpressen der Kristalle.

5. Verfahren gemaß Anspruch 1, dadurch gekennzeichnet, daß man zur Herstellung von L-Ascorbinsäure-2-phosphat oder seinen Salzen L-Ascorbinsäure bzw. ein L-Ascorbinsäurederivat als Ausgangsverbindung und Magnesiumchlorid als Magnesiumverbindung verwendet,
das durch Abtrennen von auskristallisiertem KMgPO₄ erhaltene Filtrat zur Abtrennung von Kaliumchlorid bei einem pH-Wert von 7 bis 11 bis zu einem Gehalt von 20 bis 90 Gew.-% an Trockenmasse einengt und auf Temperaturen von -20 bis +20°C abkühlt bis das Auskristallisieren von KCl beendet ist und aus der durch Abtrennen von KCl erhaltenen, weitgehend von anorganischen Salzen befreiten Reaktionslösung das L-Ascorbinsäurephosphat als solches oder in Form seiner Salze in an sich bekannter Weise isoliert.

6. Verfahren gemäß Anspruch 1, dadurch gekennzeichnet, daß man zur Herstellung von L-Ascorbinsäure-2-phosphat L-Ascorbinsäure bzw. ein L-Ascorbinsäurederivat als Ausgangsverbindung und Magnesiumchlorid als Magnesiumverbindung verwendet,
das durch Abtrennen von auskristallisiertem KMgPO₄ erhaltene Filtrat zur Abtrennung von Kaliumchlorid bei einem pH-Wert von 6 bis 11 einengt und mit der 0,1 bis 5-fachen Menge, bezogen auf das eingeengte Filtrat, an einem niederen Alkanol oder Aceton versetzt und auf Temperaturen von 0 bis 10°C abkühlt, bis das Auskristallisieren von KCl beendet ist und aus der so erhaltenen, weitgehend von anorganischen Salzen befreiten Reaktionslösung das L-Ascorbinsäurephosphat als solches oder in Form seiner Salze in an sich bekannter Weise isoliert.

7. Verfahren gemäß Anspruch 1, dadurch gekennzeichnet, daß man zur Herstellung von L-Ascorbinsäure-2-phosphat L-Ascorbinsäure bzw. ein L-Ascorbinsäurederivat als Ausgangsverbindung und Magnesiumchlorid als Magnesiumverbindung verwendet, das durch Abtrennen von auskristallisiertem KMgPO₄ erhaltene Filtrat zur Abtrennung von Kaliumchlorid bei einem pH-Wert von 6 bis 11 einengt und/oder mit der 0,1 bis 5-fachen Menge, bezogen auf das Filtrat, an einem niederen Alkanol oder Aceton versetzt und auf Temperaturen von 0 bis 10°C abkühlt, bis das Auskristallisieren von KCl beendet ist,
die so erhaltene, weitgehend von anorganischen Salzen befreite Reaktionslösung mit einem mittelaciden Kationenaustauscher, der seine Austauschkapazität in dem pH-Bereich von etwa 2,0 bis 0,5 verliert, behandelt und
aus dem erhaltenen, im wesentlichen das Monokaliumsalz von L-Ascorbinsäure-2-phosphat enthaltenden Reaktionsgemisch durch Zugabe von MgO, Mg(OH)₂ oder MgCO₃ bis zu einem pH-Wert der Lösung von etwa 7 und ggf. Behandeln mit Methanol oder Aceton das L-Ascorbinsäure-2-phosphat in Form des neuen Kaliummagnesium-L-ascorbat-2-phosphats ausfällt.

8. Kaliummagnesium-L-ascorbat-2-phosphat.

9. Kaliummagnesium-L-ascorbat-2-phosphat gemäß Anspruch 8, dadurch gekennzeichnet, daß es eine Zusammensetzung von K_{1±0,3}Mg_{1±0,15}-L-Ascorbat-2-phosphat, aufweist.

## Claims

1. A process for the preparation of ascorbic acid 2-phosphate by reacting ascorbic acid or an ascorbic acid derivative which has a group of the formula I 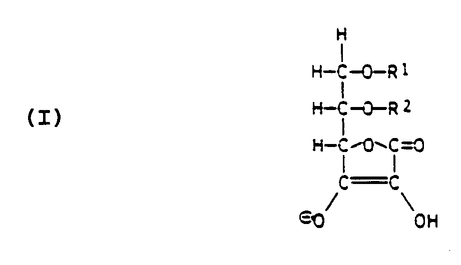 where R¹ and R² are each hydrogen or together form one of the groups 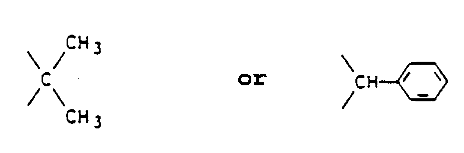 with POCl₃ in the presence of a tertiary amine in a suitable aqueous solvent at from -10 to 25°C while maintaining a pH of about 8-13.5, by adding KOH during the entire phosphorylation reaction, and then isolating the ascorbic acid 2-phosphate as such or in the form of its salts, wherein, to separate off the excess inorganic phosphate, about 90-110 mol %, based on inorganic phosphate present in the reaction mixture, of a magnesium compound, advantageously in the form of an aqueous solution, is added to the reaction mixture obtained in the phosphorylation, directly and without prior treatment with an ion exchanger, at a pH > 7, until the formation of crystalline KMgPO₄ is complete, the KMgPO₄ which is crystallized out is separated off and the ascorbic acid phosphate as such or in the form of its salts is isolated from the filtrate.

2. A process as claimed in claim 1, wherein to separate off the inorganic potassium salts, the filtrate obtained by separating off KMgPO₄ which is crystallized out is evaporated to a solids content of from 20 to 90% by weight at a pH of from 6 to 11 and cooled to a temperature of from -10 to +20°C until the potassium salts have completely crystallized out, and the ascorbic acid phosphate as such or in the form of its salts is isolated in a conventional manner from the reaction solution which is obtained by separating off the inorganic potassium salts and substantially freed from inorganic salts.

3. A process as claimed in claim 1, wherein to separate off the inorganic potassium salts, the filtrate obtained by separating off KMgPO₄ which is crystallized out is evaporated down at from 0 to 60°C and at a pH of from 6 to 11, and from 0.1 to 5 times the amount, based on the evaporated filtrate, of a lower primary alkanol or acetone is added and the stirred mixture is cooled to a temperature of from -20 to +50°C until the potassium salts have completely crystallized out, and the ascorbic acid phosphate as such or in the form of its salts is isolated in a conventional manner from the reaction solution which is obtained by separating off the inorganic potassium salts and substantially freed from inorganic salts.

4. A process as claimed in claim 1, wherein the starting material used is an ascorbic acid derivative which has a group of the formula I where R¹ and R² together form the group 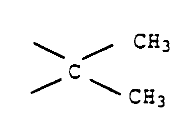 and which was prepared by treatment, for from 1 to 8 hours at from -20 to +40°C, with a mixture obtained by adding from 0 to 65% strength by weight oleum to acetone containing from 0 to 5% by weight of water at from -30 to +40°C while stirring, separating off the 5,6-isopropylideneascorbic acid which crystallizes out, at about -15°C, and pressing the crystals dry.

5. A process as claimed in claim 1, wherein to prepare L-ascorbic acid 2-phosphate or its salts, use is made of L-ascorbic acid or an L-ascorbic acid derivative as the starting compound and of magnesium chloride as the magnesium compound, to separate off potassium chloride, the filtrate obtained by separating off KMgPO₄ which is crystallized out is evaporated to a solids content of from 20 to 90% by weight at a pH of from 7 to 11 and cooled to a temperature of from -20 to +20°C until KCl has completely crystallized out, and the L-ascorbic acid phosphate as such or in the form of its salts is isolated in a conventional manner from the reaction solution obtained by separating off KCl and substantially freed from inorganic salts.

6. A process as claimed in claim 1, wherein to prepare L-ascorbic acid 2-phosphate, use is made of L-ascorbic acid or an L-ascorbic acid derivative as the starting compound and of magnesium chloride as the magnesium compound, to separate off potassium chloride, the filtrate obtained by separating off KMgPO₄ which is crystallized out is evaporated down at a pH of from 6 to 11, and from 0.1 to 5 times the amount, based on the evaporated filtrate, of a lower alkanol or acetone is added and the mixture is cooled to a temperature of from 0 to 10°C until KCl has completely crystallized out, and the L-ascorbic acid phosphate as such or in the form of its salts is isolated in a conventional manner from the resulting reaction solution substantially freed from inorganic salts.

7. A process as claimed in claim 1, wherein to prepare L-ascorbic acid 2-phosphate, use is made of L-ascorbic acid or an L-ascorbic acid derivative as the starting compound and of magnesium chloride as the magnesium compound, to separate off potassium chloride, the filtrate obtained by separating off KMgPO₄ which is crystallized out is evaporated down at a pH of from 6 to 11 and/or from 0.1 to 5 times the amount, based on the filtrate, of a lower alkanol or acetone is added and the mixture is cooled to a temperature of from 0 to 10°C until KCl has completely crystallized out, the resulting reaction solution which has been substantially freed from inorganic salts is treated with a moderately acidic cation exchanger which loses its exchange capacity at a pH of from about 2.0 to 0.5, and the L-ascorbic acid 2-phosphate is precipitated in the form of the novel potassium magnesium L-ascorbate 2-phosphate from the resulting reaction mixture essentially containing the monopotassium salt of L-ascorbic acid 2-phosphate, by adding MgO, Mg(OH)₂ or MgCO₃ until the solution has a pH of about 7 and if necessary treating the solution with methanol or acetone.

8. Potassium magnesium L-ascorbate 2-phosphate.

9. Potassium magnesium L-ascorbate 2-phosphate as claimed in claim 8, which has a composition of K_{1±0.3}Mg_{1±0.15} L-ascorbate 2-phosphate.

## Revendications

1. Procédé de préparation d'acide ascorbique-2-phosphate par réaction d'acide ascorbique ou de dérivés de l'acide ascorbique qui renferment un groupement de formule I 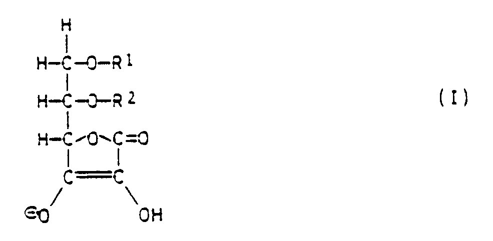 dans laquelle R¹ et R² sont mis pour des atomes d'hydrogène ou représentent ensemble l'un des groupements 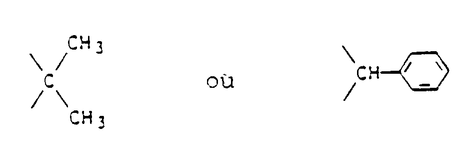 avec POCl₃ en présence d'une amine tertiaire dans un solvant aqueux approprié, à une température de -10 à 25°C, en maintenant un pH d'environ 8 à 13,5 par addition de KOH pendant toute la reaction de phosphorylation, suivie d'isolement de l'acide ascorbique-2-phosphate en tant que tel au sous forme de ses sels, caractérisé en ce qu'en vue de la séparation du phosphate inorganique en excès, le mélange réactionnel formé à la suite de la phosphorylation est additionné directement et sans traitement préalable par un échangeur d'ions, à un pH supérieur à 7, d'environ 90 à 110% en moles, par rapport au phosphate inorganique présent dans le mélange réactionnel, d'un composé du magnésium, avantageusement sous forme d'une solution aqueuse, jusqu'à ce que la formation de KMgPO₄ cristallin soit achevée, le KMgPO₄ est séparé sous forme cristallisée et le phosphate d'acide ascorbique est isolé du filtrat en tant que tel ou sous forme de ses sels.

2. Procédé selon la revendication 1, caractérisé en ce qu'en vue de la séparation des sels de potassium inorganiques, le filtrat obtenu par séparation de KMgPO₄ sous forme cristallisée est concentré à un pH de 6 à 11 jusqu'à une teneur de 20 à 90% en poids de matière sèche et il est refroidi à une température de -10 à +20°C jusqu'à ce que la séparation des sels de potassium sous forme cristallisée soit achevée, et
le phosphate d'acide ascorbique est isolé en tant que tel ou sous forme de ses sels, de façon connue en soi, de la solution réactionnelle débarrassée dans une large mesure de sels inorganiques, obtenue par séparation des sels de potassium inorganiques.

3. Procédé selon la revendication 1, caractérisé en ce qu'en vue de la séparation des sels de potassium inorganiques, le filtrat obtenu par séparation de KMgPO₄ sous forme cristallisée est concentré à une température de 0 à 60°C et à un pH de 6 à 11, il est additionné d'une quantité de 0,1 à 5 fois, par rapport au filtrat concentré, d'un alcanol intérieur primaire ou d'acétone et il est refroidi sous agitation à une température de -20 à +50°C jusqu'à ce que la séparation des sels de potassium sous forme cristallisée soit achevée, et
le phosphate d'acide ascorbique est isolé en tant que tel ou sous forme de ses sels, de façon connue en soi, de la solution réactionnelle débarrassée dans une large mesure de sels inorganiques, obtenue par séparation des sels de potassium inorganiques.

4. Procédé selon la revendication 1, caractérisé en ce que l'on part d'un dérivé d'acide ascorbique qui renferme un groupement de formule I dans laquelle R¹ et R² représentent ensemble le groupement 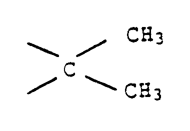 et qui a été préparé par traitement pendant 1 à 8 h, à une température de -20 à +40°C, par un mélange qui a été obtenu par addition d'oléum à 0-65% en poids à une acétone contenant 0 à 5%, en poids d'eau à une température de -30 à +40°C et sous agitation, séparation de l'acide 5,6-isopropylidène-ascorbique sous forme cristallisée à une température d'environ -15°C et séchage des cristaux par pression.

5. Procédé selon la revendication 1, caractérisé en ce que, pour la préparation d'acide L-ascorbique-2-phosphate ou de ses sels, on utilise de l'acide L-ascorbique ou un dérivé d'acide L-ascorbique comme compose de départ et du chlorure de magnésium comme composé du magnésium, et
en ce qu'en vue de la séparation de chlorure de potassium, le filtrat obtenu par séparation de KMgPO₄ sous forme cristallisée est concentré, à un pH de 7 à 11, jusqu'à une teneur de 20 à 90% en poids en matières solides et refroidi à une température de -20 à +20°C jusqu'à ce que la séparation de KCl sous forme cristallisée soit achevée, et le phosphate d'acide L-ascorbique est isolé en tant que tel ou sous forme de ses sels, de façon connue en soi, de la solution réactionnelle débarrassée dans une large mesure de sels inorganiques, obtenue par séparation de KCl.

6. Procedé selon la revendication 1, caractérisé en ce que, pour la préparation d'acide L-ascorbique-2-phosphate, on utilise de l'acide L-ascorbique ou un dérivé d'acide L-ascorbique comme composé de départ et du chlorure de magnésium comme composé du magnésium, et
en ce qu'en vue de la séparation de chlorure de potassium, le filtrat obtenu par séparation de KMgPO₄ sous forme cristallisée est concentré à un pH de 6 a 11, additionné d'une quantité de 0,1 a 5 fois, par rapport au filtrat concentré, d'un alcanol inférieur ou d'acétone et refroidi à une température de 0 à 10°C jusqu'a ce que la séparation de KCl sous forme cristallisée soit achevée, et le phosphate d'acide L-ascorbique est isolé en tant que tel ou sous forme de ses sels, de façon connue en soi, de la solution réactionnelle ainsi obtenue, débarrassée dans une large mesure de sels inorganiques.

7. Procédé selon la revendication 1, caractérisé en ce que, pour la préparation d'acide L-ascorbique-2-phosphate, on utilise de l'acide L-ascorbique ou un dérivé d'acide L-ascorbique comme composé de départ et du chlorure de magnésium comme composé du magnésium, et
en ce qu'en vue de la séparation de chlorure de potassium, le filtrat obtenu par séparation de KMgPO₄ sous forme cristallisée est concentré à un pH de 6 à 11 et/ou additionné d'une quantité de 0,1 à 5 fois, par rapport au filtrat, d'un alcanol inférieur ou d'acétone et refroidi à une température de 0 a 10°C jusqu'à ce que la séparation de KCl sous forme cristallisée soit achevée, la solution réactionnelle ainsi obtenue, débarrassée dans une large mesure de sels inorganiques, est traitée par un échangeur de cations d'acidité moyenne qui perd sa capacité d'échange dans la plage de pH d'environ 2,0 à 0,5 et, à partir du mélange réactionnel obtenu, contenant essentiellement le sel monopotassique d'acide L-ascorbique-2-phosphate, l'acide L-ascorbique-2-phosphate est séparé par précipitation, sous forme du nouveau L-ascorbate-2-phosphate de potassium-magnésium, par addition de MgO, de Mg(OH)₂ ou de MgCO₃ jusqu'à un pH de la solution de 7 environ et traitement éventuel par du méthanol ou de l'acétone.

8. L-Ascorbate-2-phosphate de potassium-magnésium.

9. L-Ascorbate-2-phosphate de potassium-magnésium selon la revendication 8, caractérisé en ce qu'il présente une composition de K_{1±0,3}Mg_{1±0,15}-L-ascorbate-2-phosphate.
